# EUROPEAN PATENT SPECIFICATION

(11) **EP 2 990 314 B1**
(45) Date of publication and mention of the grant of the patent: **26.12.2018**
(21) Application number: 15177999.8
(22) Date of filing: 23.07.2015
(51) Int. Cl.: B62J 6/04, B62J 15/00, B62J 99/00

(54) **REAR PORTION STRUCTURE FOR A MOTORCYCLE**
HECKSTRUKTUR FÜR EIN MOTORRAD
STRUCTURE DE PARTIE ARRIÈRE POUR UNE MOTOCYCLETTE

(30) Priority: 29.08.2014 JP 2014176100
(43) Date of publication of application: 02.03.2016
(73) Proprietor: HONDA MOTOR CO., LTD., Tokyo 107-8556 (JP)
(72) Inventor: NAMAI, Masashi, Wako-shi, Saitama 351-0193 (JP); SAKAMOTO, Kazuhiro, Wako-shi, Saitama 351-0193 (JP); KOJIMA, Shinichi, Wako-shi, Saitama 351-0193 (JP)
(74) Representative: Kudlek, Franz Thomas

(56) References cited:
- JP-A- H04 345 585
- JP-A- 2004 131 016

## Description

The present invention relates to a rear portion structure for a motorcycle, according to the preamble of independent claim 1.

A motorcycle wherein, in order to prevent an influence of heat from a tail lamp provided at a rear portion of a rear cover from being had on a luggage on a luggage carrier provided on the rear cover, a cover portion provided integrally on the luggage carrier covers the tail lamp from above, is known from Japanese Patent Laid-Open No. 2011-063067.

Incidentally, a license plate lamp separate from a tail lamp is sometimes attached to a rear fender so as to illuminate the license plate from above. In this case, the license plate lamp is attached to the rear fender at a position spaced downwardly from the tail lamp. Therefore, the attaching portion of the license plate lamp to the rear fender is exposed to the outside, and this gives rise to a problem in design properties.

The present invention has been made in view of such a circumstance as described above, and it is an object of at least the preferred embodiments of the present invention to provide a rear portion structure for a motorcycle wherein an attaching portion of a license plate lamp to a rear fender is made less likely to be seen thereby to enhance design properties.

It is known from JP H04 345585 to provide a rear portion structure for a motorcycle as in the pre-characterising portion of claim 1.

It is known from JP 2004 131016 to provide a rear portion structure for a motorcycle comprising a reflective plate attached to a rear fender disposed between a license plate lamp and a license plate.

According to the invention, there is provided a rear portion structure for a motorcycle, as defined in independent claim 1.

The rear projection formed integrally at the upper portion of the rear fender projects rearwardly along the upper face of the license plate lamp. Therefore, the attaching portion of the license plate lamp to the rear fender is made less likely to be seen thereby to enhance the design properties.

Since the rear projection is hollow, the rear projection can be formed thin and can be reduced in weight. Further, since the upper face of the rear projection is inclined rearwardly downwardly, rainwater sticking to the rear projection can be readily dropped rearwardly, and the attaching portion of the license plate lamp to the rear fender can be made further less likely to be seen thereby to enhance the design properties. Further, since the rear projection is formed thin, also it is facilitated to form the inclined upper face of the rear projection.

The opposite ends of the rear projection in the vehicle widthwise direction are positioned on the outer sides in the vehicle widthwise direction farther than the attaching portion of the license plate lamp to the rear fender. Therefore, the attaching portion of the license plate lamp to the rear fender can be made further less likely to be seen thereby to further raise the design properties. Besides, rainwater dropping from the upper face of the rear projection becomes less likely to
be collected into a gap around the attaching portion of the license plate lamp to the rear fender.

The reflective plate is attached to the rear fender between the license plate lamp and the license plate. Therefore, by making the distance between the license plate lamp and the license plate comparatively great, diffused light becomes likely to be irradiated upon the license plate. Further, the reflective plate can be attached to the rear fender making effective use of the space between the license plate lamp and the license plate.

A preferred embodiment of the invention will now be described by way of example only and with reference to the accompanying drawings, in which:
FIG. 1 is a left side elevational view of a motorcycle;
FIG. 2 is a view taken in a direction indicated by an arrow mark 2 in FIG. 1;
FIG. 3 is a view of a front side cover and a leg shield as viewed in a direction same as the direction in FIG. 2;
FIG. 4 is a view of a leg shield main body of a portion of the leg shield as viewed in a direction same as the direction in FIG. 2;
FIG. 5 is a view of a cover member of a portion of the leg shield as viewed in a direction same as the direction in FIG. 2;
FIG. 6 is a view taken in a direction indicated by an arrow mark 6 of FIG. 4;
FIG. 7 is a perspective view of an accommodation case;
FIG. 8 is a sectional view taken along line 8-8 of FIG. 2;
FIG. 9 is a view of the front side cover as viewed in a direction indicated by an arrow mark 9 of FIG. 2;
FIG. 10 is a sectional view taken along line 10-10 of FIG. 1; and
FIG. 11 is a view of part of the leg shield and the front cover as viewed in a direction same as the direction in FIG. 10;
FIG. 12 is a view taken along line 12-12 of FIG. 1;
FIG. 13 is a sectional view taken along line 13-13 of FIG. 12.

In the following, an embodiment of the present invention is described with reference to the drawings.

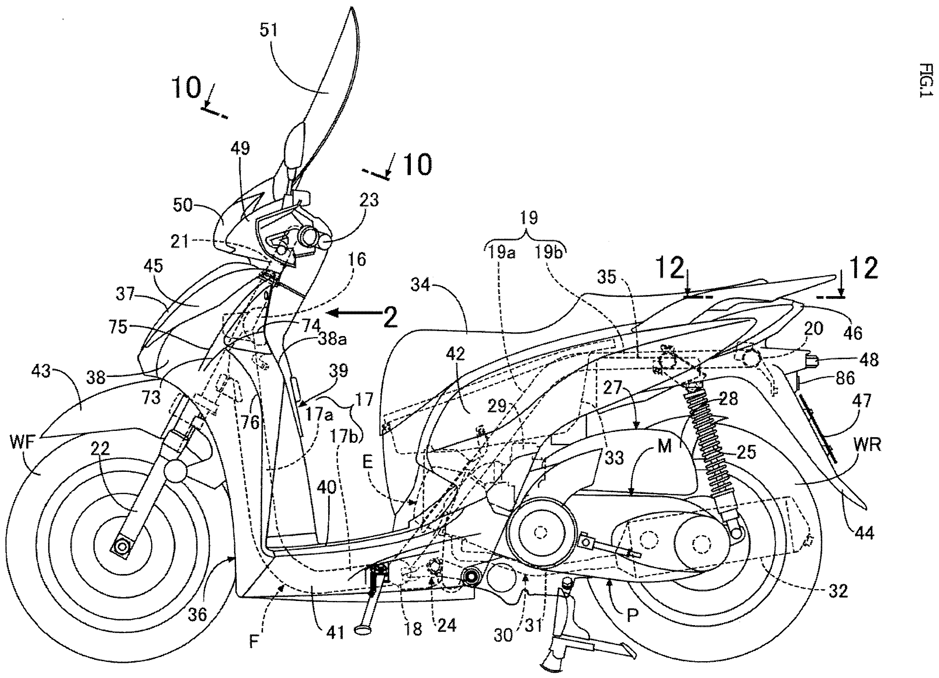

Referring first to FIG. 1, a vehicle body frame F of a motorcycle of the scooter type includes a main frame 17, a cross pipe 18, a pair of left and right rear frames 19, and a cross member 20. The main frame 17 has a head pipe 16 fixedly attached to a front end thereof. The cross pipe 18 is fixedly attached at the right angle to a rear end of the main frame 17. The pair of left and right rear frames 19 are provided continuously at a front end thereof to the opposite end portions of the cross pipe 18. The cross member 20 adjusts the distance between rear end portions of the rear frames 19.

The main frame 17 is formed by bending and shaping a pipe such that it integrally has a down frame portion 17a and a lower frame portion 17b. The down frame portion 17a is inclined rearwardly downwardly from the head pipe 16, and the lower frame portion 17b extends rearwardly substantially horizontally from a rear end of the down frame portion 17a. The cross pipe 18 extends in leftward and rightward directions of the vehicle body frame F and is fixedly attached at a middle portion thereof in an axial direction to a rear end portion of the main frame 17, namely, to a rear end of the lower frame portion 17b, so as to extend at the right angle. Each of the rear frames 19 is formed by bending and shaping a pipe such that it has an inclined frame portion 19a and a horizontal frame portion 19b. The inclined frame portion 19a extends rearwardly upwardly from the cross pipe 18, and the horizontal frame portion 19b extends substantially horizontally in a rearward direction from an upper end of the inclined frame portion 19a. The left and right horizontal frame portions 19b are connected at a rear end portion thereof to each other by the cross member 20.

A steering shaft 21 is supported for steering movement on the head pipe 16 and extends upwardly and downwardly. A front fork 22 is connected to a lower end portion of the steering shaft 21 and supports a front wheel WF at a lower end portion thereof. A steering handlebar 23 in the form of a bar is connected to an upper portion of the steering shaft 21.

A power unit P of the unit swing type is supported for upward and downward rocking motion at a front portion of the rear frames 19 of the vehicle body frame F through a link 24 so as to allow upward and downward rocking motion. The power unit P is configured from an engine E disposed on the front side with respect to a rear wheel WR and a transmission system M disposed on the left side with respect to the rear wheel WR. The rear wheel WR is supported for rotation at a rear portion of the power unit P. A rear cushion unit 25 is provided between an intermediate portion of the horizontal frame portion 19b of the left side one of the pair of left and right rear frames 19 and a rear portion of the power unit P.

An intake system 27 of the engine E includes an air cleaner 28 and a throttle body 29 disposed on the left side with respect to the rear wheel WR. An exhaust system 30 of the engine E includes an exhaust pipe 31 extending on the right side with respect to the rear wheel WR and an exhaust muffler 32 disposed on the right side of the rear wheel WR.

An accommodation box 33 is supported between front portions of the rear frames 19 of the vehicle body frame F and disposed above the engine E. A riding seat 34 is supported at an upper portion of the front side of the accommodation box 33 and covers the accommodation box 33 from above such that it can open and close the accommodation box 33. Further, a fuel tank 35 is supported on the rear frames 19 and disposed behind the accommodation box 33.

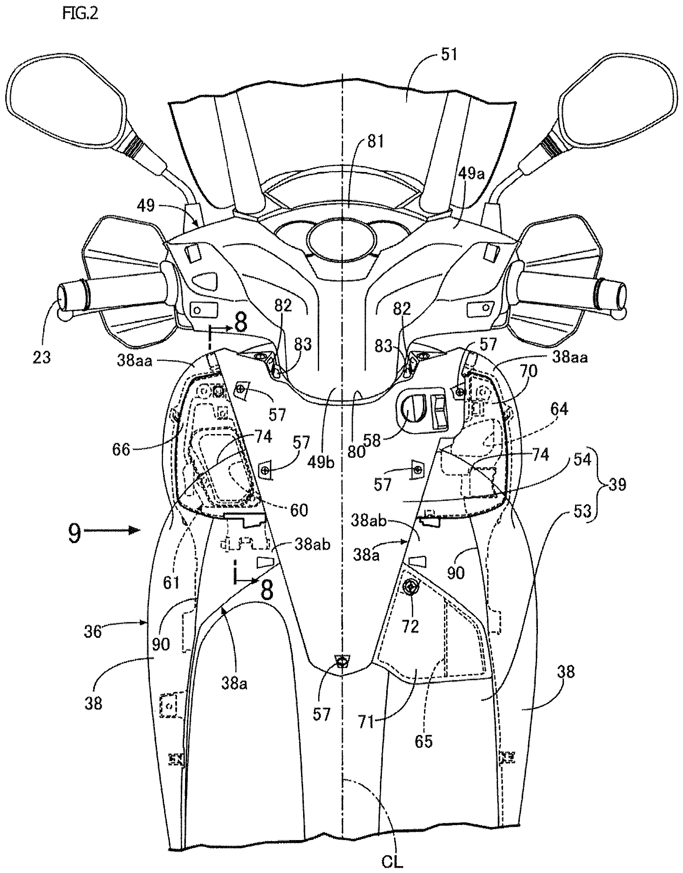

Referring also to FIG. 2, the vehicle body frame F, the engine E, the accommodation box 33, and the fuel tank 35 are covered with a vehicle body cover 36. The vehicle body cover 36 includes a front cover 37, a pair of front side covers 38, a leg shield 39, a step floor 40, a pair of side under cowls 41, and a rear cover 42. The front cover 37 covers the head pipe 16 at a front end portion of the vehicle body frame F from the front side. The front side covers 38 are provided continuously to a lower portion of the front cover 37 and covers the head pipe 16 from the opposite left and right sides. The leg shield 39 is provided continuously to the pair of left and right front side covers 38 and covers the head pipe 16 and the down frame portion 17a of the main frame 17 from the rear side in front of the legs of an occupant seated on the riding seat 34. The step floor 40 is provided continuously to a lower portion of the leg shield 39. The side under cowls 41 extend rearwardly from a lower end of the leg shield 39 and are provided continuously to the opposite sides of the step floor 40 in such a manner as to cover the lower frame portion 17b of the main frame 17 from the sides. The rear cover 42 is connected to a rear end of the side under cowls 41 and covers the accommodation box 33 and the fuel tank 35 from the opposite sides. The riding seat 34 is disposed on the rear cover 42.

The front wheel WF is covered from above with a front fender 43. The front fender 43 is supported by the front fork 22. Meanwhile, the rear wheel WR is covered from the upper obliquely rear side with a rear fender 44 provided continuously to a rear portion of the rear cover 42 disposed so as to extend downwardly from a rear portion of the rear cover 42. The rear fender 44 is supported on the rear frames 19.

A winker lamp 45 is provided between each of the opposite left and right sides of the front cover 37 and each of the pair of left and right front side covers 38. A tail lamp 46 is disposed at a rear portion of the rear cover 42, and the rear fender 44 is disposed below the tail lamp 46 and has a license plate 47 attached thereto. A license plate lamp 48 is disposed on the rear fender 44 and illuminates the license plate 47 from above.

An upper portion of the steering shaft 21 and a middle portion of the steering handlebar 23 are covered with a handlebar cover 49, and a head lamp 50 is disposed at a front portion of the handlebar cover 49. A windscreen 51 is attached to the handlebar cover 49 and rises upwardly from the handlebar cover 49.

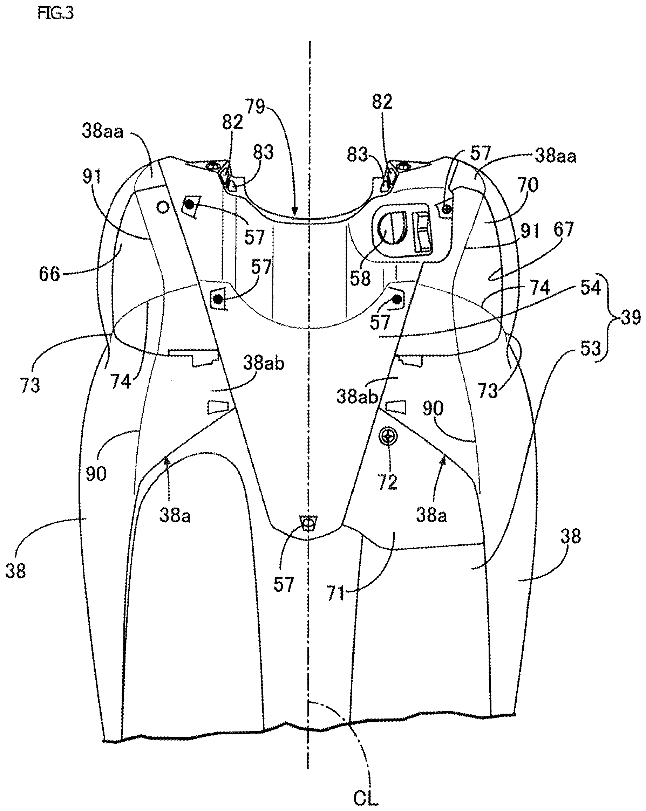

Paying attention to FIGS. 2 and 3, the leg shield 39 is configured from a leg shield main body 53 and a cover member 54. The leg shield main body 53 is provided continuously at the opposite left and right side portions thereof to the pair of left and right front side covers 38. The cover member 54 is fastened to an upper portion at a middle location in the vehicle widthwise direction of the leg shield main body 53.

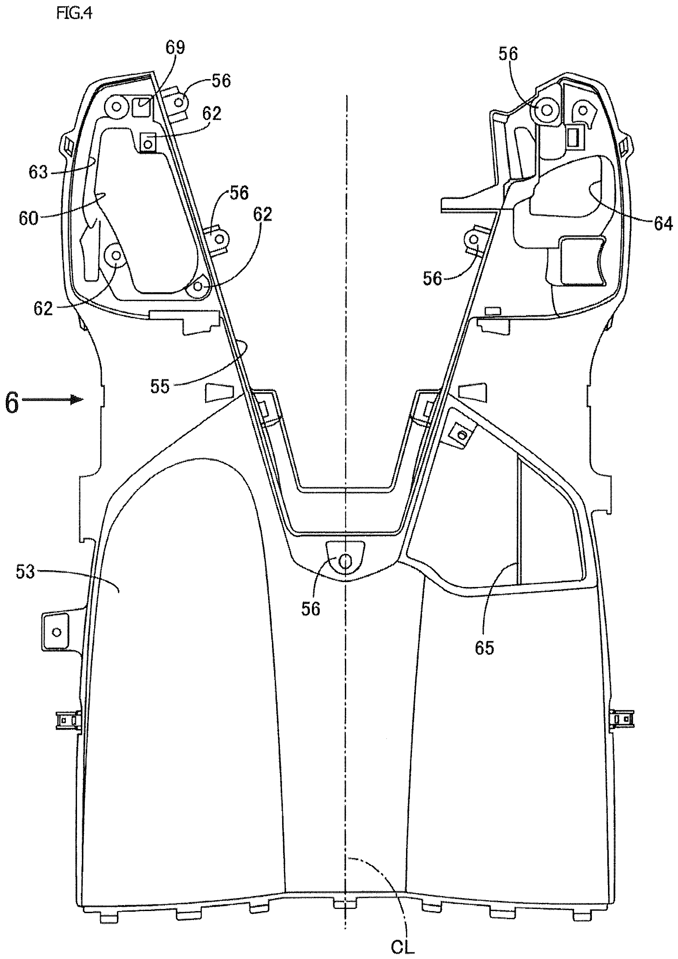

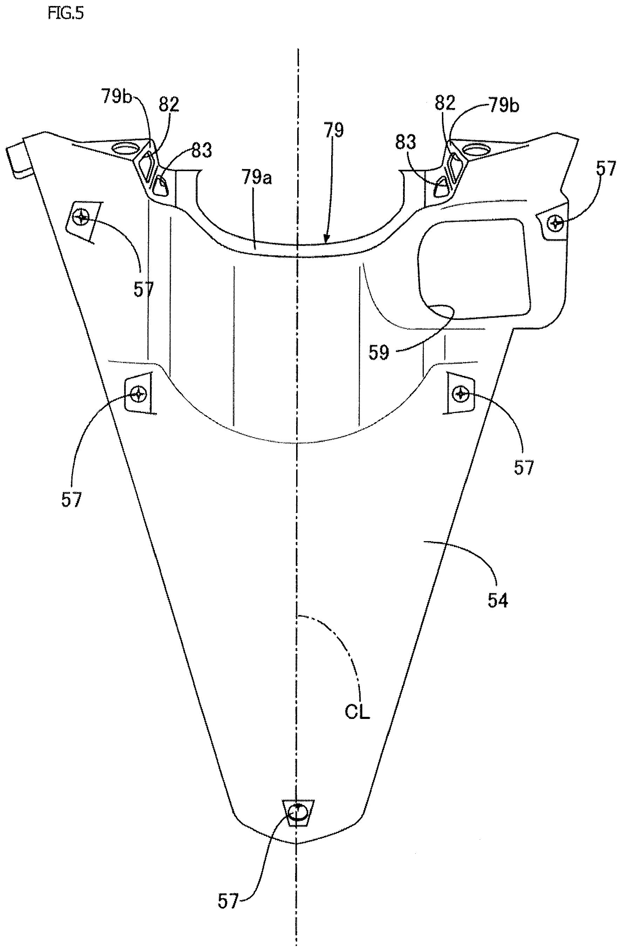

As depicted in FIG. 4, a cutout portion 55 of a substantially V shape open upwardly is provided at an upper portion at a middle location in the vehicle widthwise direction of the leg shield main body 53. Meanwhile, the cover member 54 has a shape corresponding to the cutout portion 55 as depicted in FIG. 5. The cover member 54 is fastened at a plurality of places on a peripheral edge portion of the cutout portion 55 to attaching portions 56 provided on the leg shield main body 53 individually by screw members 57, and the cutout portion 55 is closed up with the cover member 54. A first opening 59 is provided at a right side portion of an upper portion of the cover member 54 and has a main switch 58 depicted in FIG. 2 disposed therein.

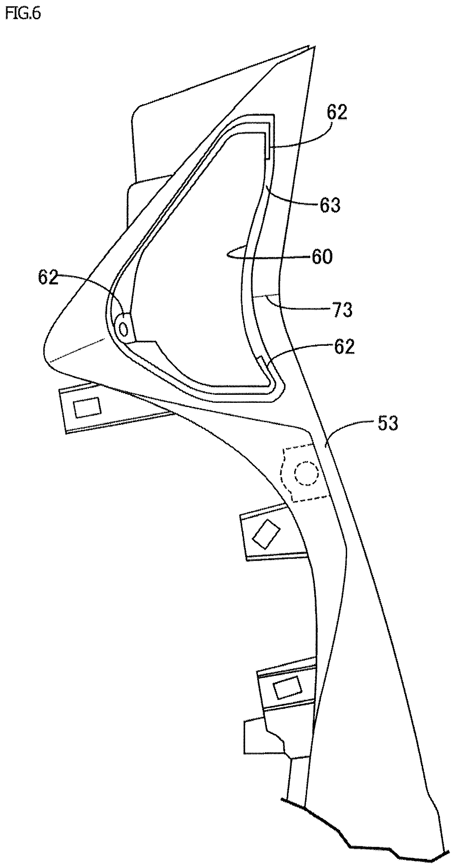

Referring also to FIG. 6, a second opening 60 is provided at an upper portion of a left side portion of the leg shield main body 53. An accommodation case 61 is accommodated in the second opening 60 and projects forwardly. The accommodation case 61 is attached to the leg shield main body 53.

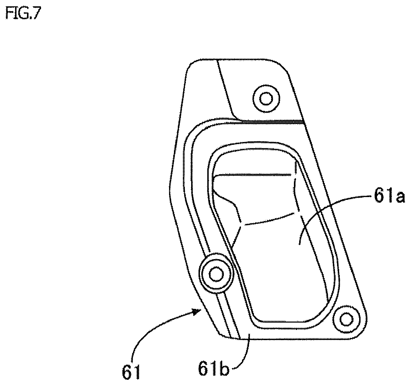

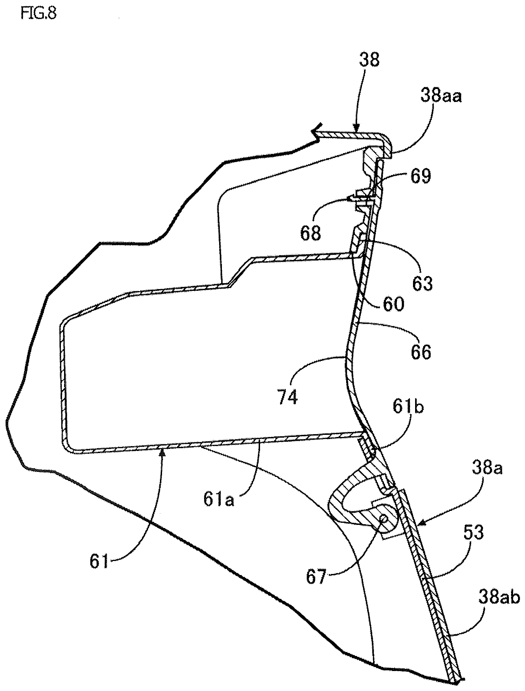

Referring to FIGS. 7 and 8, the accommodation case 61 is formed such that a box-shaped portion 61a formed like a box closed at a front end thereof and fitted in the second opening 60 and a flange portion 61b swollen outwardly sidewardly from a rear end of the accommodation case 61 are provided integrally thereon. The accommodation case 61 is attached at the flange portion 61b thereof to a plurality of, for example, three, attaching portions 62 provided on the leg shield main body 53 around the second opening 60 by screw members not depicted. In particular, the flange portion 61b is provided integrally with a rear portion of the accommodation case 61 and swollen outwardly sidewardly, and the accommodation case 61 is attached at the flange portion 61b to the leg shield main body 53 of the leg shield 39 around the second opening 60. Besides, a recess portion 63 is formed on the leg shield main body 53 around the second opening 60 and accommodates the flange portion 61b therein.

A third opening 64 for allowing maintenance therethrough is provided at a right side upper portion of the leg shield main body 53 as depicted in FIG. 4. A fourth opening 65 for allowing maintenance therethrough is provided at a lower right side portion of the leg shield main body 53.

Paying attention to FIG. 8, the second opening 60 is closed for opening with a first lid 66. The first lid 66 is supported at a lower portion thereof on the leg shield main body 53 below the second opening 60. A locking hole 69 is provided on the leg shield main body 53 above the second opening 60 such that it can removably lock an engaging claw 68 provided at an upper portion of the first lid 66.

The third opening 64 is closed up for opening with a second lid 70. The second lid 70 is supported for pivotal motion at a lower portion thereof on the leg shield main body 53 below the third opening 64 by a hinge structure similar to that of the first lid 66. The second lid 70 is releasably locked at an upper portion thereof by the leg shield main body 53 above the third opening 64.

The fourth opening 65 is closed up with the third lid 71. The third lid 71 is fastened to a lower portion of the leg shield main body 53 by a screw member 72.

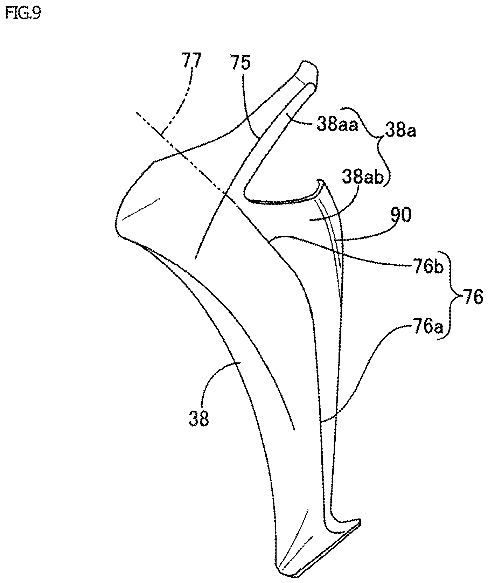

Referring also to FIG. 9, an extension 38a is provided integrally on the front side cover 38 on the left side. The extension 38a extends to a left side rear face of the leg shield main body 53 of the leg shield 39 and surrounds at least part of the second opening 60 and besides overlaps with a rear face of the leg shield main body 53 around the second opening 60. In the present embodiment, the extension 38a is formed so as to surround the second opening 60 from the outer side on the opposite side to the cover member 54 and from above and from below such that it cooperates with the cover member 54 to surround the second opening 60 over an overall circumference. In particular, the extension 38a has an upper extension portion 38aa disposed above the second opening 60 and a lower extension portion 38ab disposed below the second opening 60 and is formed in a substantially U shape open to the second opening 60 side.

Besides, the extension 38a is provided so as to surround the flange portion 61b, which is provided integrally at a rear portion of the accommodation case 61 projecting forwardly from the second opening 60 and is swollen outwardly sidewardly, from the outer side.

Another extension 38a is provided also on the front side cover 38 on the right side. The extension 38a extends to a right side rear face of the leg shield main body 53 of the leg shield 39 and cooperates with the cover member 54 to surround the third opening 64 over an overall periphery. Further, the extension 38a overlaps with a rear face of the leg shield main body 53 around the third opening 64.

At each of portions of the leg shield main body 53 of the leg shield 39 and the front side cover 38 corresponding to the second and the third openings 60 and 64, a curved portion 73 is formed such that it is curved forwardly as viewed in side elevation. The first and the second lids 66 and 70 have a curved portion 74 corresponding to the curved portion 73 and are attached to the leg shield main body 53 in such a manner as to openably close up the second and the third openings 60 and 64.

An upper ridge line 75 and a lower ridge line 76 are formed on the front side cover 38 so as to project forwardly. The upper ridge line 75 is disposed in a forwardly downwardly inclined relationship as viewed in side elevation in front of the second and the third openings 60 and 64. The lower ridge line 76 is disposed below the second and the third openings 60 and 64 and has a vertical ridge line portion 76a and an inclined ridge line portion 76b. The vertical ridge line portion 76a extends upwardly and downwardly as viewed in side elevation, and the inclined ridge line portion 76b extends forwardly upwardly in a bent state from an upper end of the vertical ridge line portion 76a toward the upper ridge line 75 side.

Besides, the upper ridge line 75 extends forwardly farther than a location at which the upper ridge line 75 crosses with an extension line 77 of the lower ridge line 76 toward the upper ridge line 75 side as viewed in side elevation.

Incidentally, on the front side cover 38, a ridge line 90 is formed such that it extends in the upward and downward direction so as to form a boundary between a rear face of the leg shield main body 53 and the extension 38a overlapping with the rear face of the leg shield main body 53. Meanwhile, a ridge line 91 is formed on the first and the second lids 66 and 70 and connects to the ridge line 90 such that it crosses with the curved portion 74.

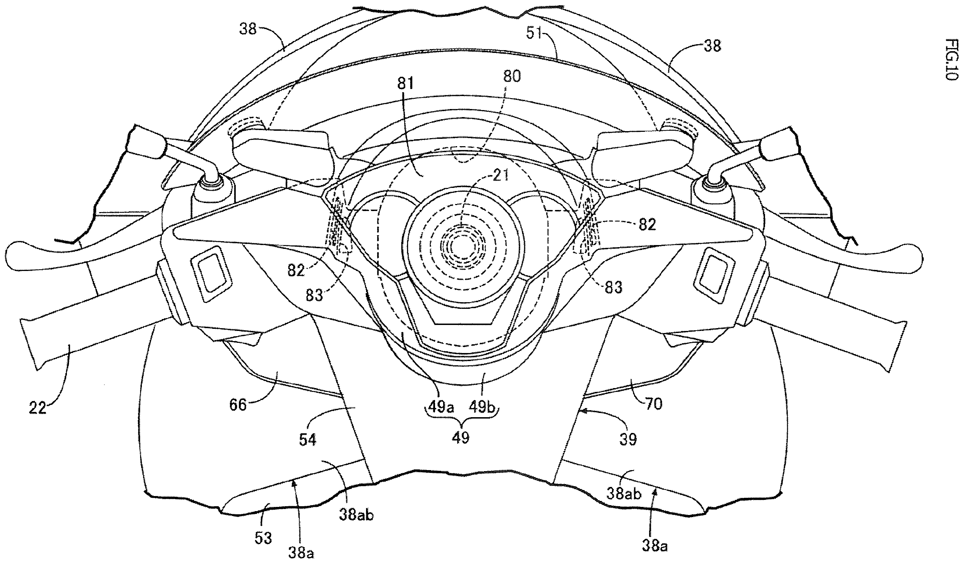

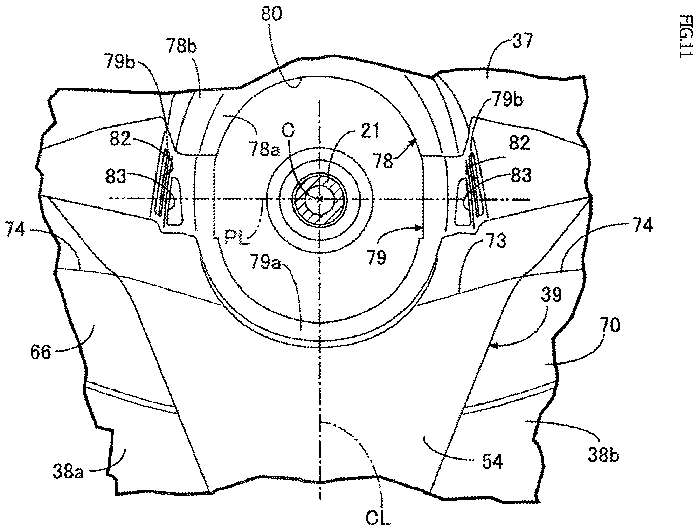

Referring FIGS. 10 and 11, upper opposing walls 78 and 79 are formed at an upper portion of the front cover 37 and an upper portion of the cover member 54 of the leg shield 39, respectively. The upper opposing walls 78 and 79 oppose to a lower portion of a middle portion in the vehicle widthwise direction of the handlebar cover 49. The upper opposing walls 78 and 79 cooperatively form an insertion hole 80 which extends upwardly and downwardly and through which the steering shaft 21 is inserted.

Incidentally, the handlebar cover 49 is formed such that it has a cover main portion 49a and a neck portion 49b. The cover main portion 49a has a meter unit 81 disposed at an upper portion of a middle portion thereof in the vehicle widthwise direction. The neck portion 49b connects to a lower portion of a middle portion in the vehicle widthwise direction of the cover main portion 49a and extends downwardly. The upper opposing walls 78 and 79 are configured from flat plate portions 78a and 79a and side wall portions 78b and 79b. The flat plate portions 78a and 79a face upwardly in a neighboring and opposing relationship to a lower end portion of the neck portion 49b. The side wall portions 78b and 79b are opposed to lower side walls of the neck portion 49b from the sides.

The flat plate portions 78a and 79a are formed in an arcuate shape such that they cooperate with each other to form the insertion hole 80. The side wall portions 78b of the upper opposing wall 78 on the front cover 37 side are formed such that they rise upwardly from an outer peripheral edge of the flat plate portion 78a in an opposing relationship to side walls of a lower portion on the front half side of the neck portion 49b. The upper opposing wall 79 on the leg shield 39 side has a pair of left and right side wall portions 79b, which are formed so as to rise upwardly from a front portion of an outer peripheral edge of the flat plate portion 79a in an opposing relationship to the opposite side walls in the vehicle widthwise direction of the neck portion 49b.

Incidentally, running wind enters the front cover 37 from the front when the motorcycle runs. Discharge holes 82 and 83 for rectifying and discharging the running wind rearwardly are provided at least on one of the upper opposing wall 78 of the front cover 37 and the upper opposing wall 79 of the cover member 54 of the leg shield 39 in such a manner that they are disposed at a position at which they oppose to a lower portion of a middle portion in the vehicle widthwise direction of the handlebar cover 49 from the sides. In the present embodiment, the discharge holes 82 and 83 are provided in the upper opposing wall 79 of the cover member 54 of the leg shield 39.

The discharge holes 82 and 83 are provided in the side wall portions 79b on the opposite sides in the vehicle widthwise direction of the upper opposing wall 79 of the leg shield 39 in an opposing relationship to the neck portion 49b at a lower portion of a middle portion in the vehicle widthwise direction of the handlebar cover 49. A plurality of (in the present embodiment, two) discharge holes 82 and 83 separate upwardly and downwardly are provided in each of the side wall portions 79b.

Besides, the discharge holes 82 and 83 in pair on each of the left and right are disposed at a position which a plane PL passes. The plane PL passes an axial line of the steering shaft 21 and extends in the vehicle widthwise direction in a crossing relationship with a widthwise center line CL of the motorcycle.

The side wall portions 79b are formed in an inclined relationship such that they are positioned outwardly in the vehicle widthwise direction toward the rear. The discharge holes 82 and 83 provided in the side wall portions 78b are formed so as to be directed obliquely rearwardly toward the center of the vehicle body in the vehicle widthwise direction.

Further, the discharge holes 82 and 83 are disposed at a position at which they overlap with the handlebar cover 49 as viewed from above (state depicted in FIG. 10) in a direction along the axial line of the steering shaft 21.

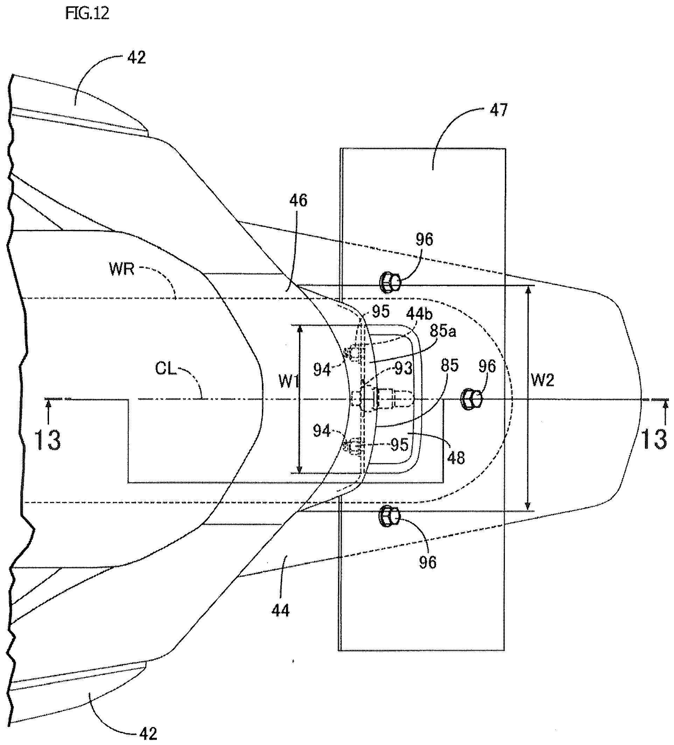

Referring also to FIG. 12, a grab rail 84 is supported on the pair of left and right rear frames 19 described hereinabove and disposed so as to rise upwardly from a rear portion of the rear cover 42. The tail lamp 46 is disposed below the grab rail 84 and provided at a rear portion of the rear cover 42.

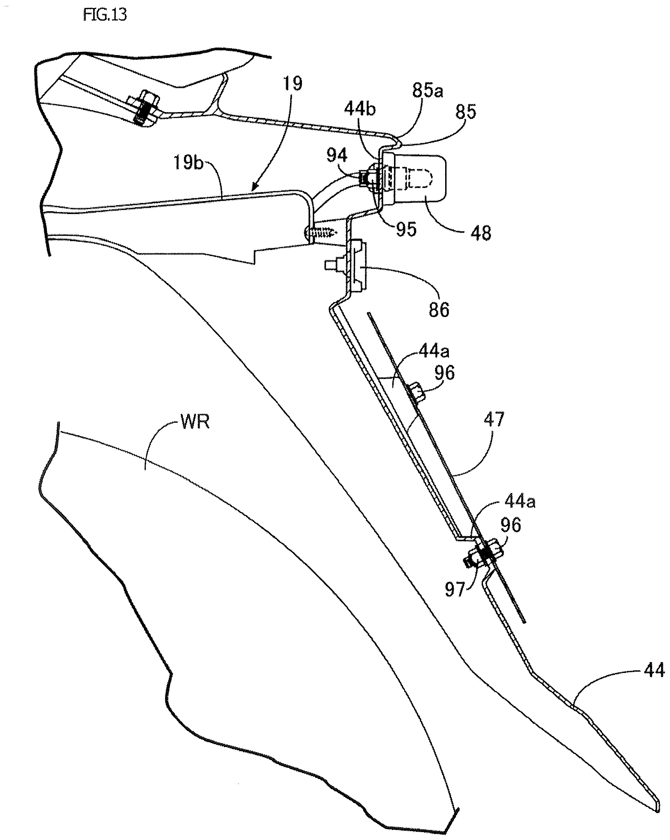

Referring also to FIG. 13, a plurality of, for example, three, boss portions 44a for fixing the license plate 47 are provided integrally on the rear fender 44 disposed below the tail lamp 46 so as to project rearwardly. The license plate 47 is fixed to the rear fender 44 by screwing and tightening a nut 97 on the inner face side of the rear fender 44 with and to each of three bolts 96 fitted in the license plate 47 and the boss portions 44a.

Further, the license plate lamp 48 is disposed at an upper position of the rear fender 44 and positioned on the widthwise center line CL such that it illuminates the license plate 47 from above. An attaching plate portion 44b for attaching the license plate lamp 48 thereto is provided integrally at an upper portion of the rear fender 44 such that it extends in the leftward and rightward direction. An attaching hole 93 is provided in the attaching plate portion 44b and disposed on the widthwise center line CL. The license plate lamp 48 is abutted with an outer face of the attaching plate portion 44b and partly projects into the rear fender 44 through the attaching hole 93. A pair of left and right bolts 94 are provided on the license plate lamp 48 and disposed on the opposite left and right sides of the attaching hole 93. The bolts 94 are inserted in the attaching plate portion 44b on the opposite sides of the attaching hole 93. The license plate lamp 48 is disposed at an upper portion of the rear fender 44 by screwing and tightening nuts 95 with and to the bolts 94 from the rear side of the rear fender 44.

Besides, a rear projection 85 is formed integrally at an upper portion of the rear fender 44 and projects rearwardly along an upper face of the license plate lamp 48.

The rear projection 85 is formed hollow such that an upper face 85a thereof is inclined rearwardly downwardly. Besides, the rear projection 85 is formed such that it protrudes to the outer side in the vehicle widthwise direction farther than the attachment portion of the license plate lamp 48 to the rear fender 44. In other words, a width W2 of the rear projection 85 formed on the rear fender 44 at a central location in the vehicle widthwise direction is set greater than a width W1 of the attaching portion of the license plate lamp 48, which is disposed on the rear fender 44 on the widthwise center line CL, to the rear fender 44.

Further, a reflective plate 86 is attached to the rear fender 44 such that it is disposed between the license plate lamp 48 and the license plate 47.

Now, operation of the present embodiment is described. The second and the third openings 60 and 64 are provided in the leg shield 39 which covers the head pipe 16 at a front end portion of the vehicle body frame F from the rear are provided. Further, on the pair of front side covers 38 provided continuously to the opposite left and right sides of the leg shield 39 and covering the head pipe 16 from the opposite left and right sides, the extensions 38a which extend to the rear face of the leg shield 39 and surround at least part of the second and the third openings 60 and 64 and besides overlap with the rear face of the leg shield 39 around the second and the third openings 60 and 64 are provided integrally. Therefore, provision of many ribs on the leg shield 39 is made unnecessary without forming the leg shield 39 thick, and the rigidity can be assured readily without complicating the structure and without leading to increase of the weight. Besides, since the extensions 38a are provided integrally with the front side covers 38, a joint does not appear on the front side covers 38 and superior design properties can be assured.

Further, the accommodation case 61 is accommodated in the second opening 60 so as to project forwardly, and the flange portion 61b provided integrally at a rear portion of the accommodation case 61 and swollen outwardly sidewardly is attached to the leg shield 39 around the second opening 60 while the extension 38a is formed so as to surround the flange portion 61b from the outer side. Therefore, the rigidity of the leg shield 39 in the proximity of the second opening 60 can be raised further.

Further, the curved portion 73 curved forwardly as viewed in side elevation is formed at each of portions of the leg shield 39 and the front side covers 38 corresponding to the second and the third openings 60 and 64, and the first and the second lids 66 and 70 for openably closing the second and the third openings 60 and 64 are attached to the leg shield 39. Therefore, the rigidity is increased by the curved shape, and besides, by closing the openings with the first and the second lids 66 and 70, the rigidity in the proximity of the second and the third openings 60 and 64 can be increased.

Further, the upper ridge line 75 disposed in a forwardly downwardly inclined state as viewed in side elevation in front of the second and the third openings 60 and 64 and the lower ridge line 76 having the vertical ridge line portion 76a extending upwardly and downwardly as viewed in side elevation and the inclined ridge line portion 76b extending forwardly upwardly in a bent state from the upper end of the vertical ridge line portion 76a toward the upper ridge line 75 side and disposed below the second and the third openings 60 and 64 are formed on the front side covers 38 so as to project sidewardly. Therefore, the front portion structure can contribute to enhancement in rigidity of the front side covers 38.

Besides, the upper ridge line 75 extends forwardly farther than the location at which the upper ridge line 75 crosses with the extension line 77 of the lower ridge line 76 which extends toward the upper ridge line 75 side as viewed in side elevation. Therefore, the upper ridge line 75 can be made long in the forward and rearward direction to further raise the rigidity of the front side covers 8.

Meanwhile, the upper opposing walls 78 and 79 which oppose to a lower portion of the handlebar cover 49, which covers the bar-shaped steering handlebar 23 contiguous to the steering shaft 21 steerably supported on the head pipe 16 and extending upwardly and downwardly, at a middle location in the vehicle widthwise direction and cooperatively form the insertion hole 80 in which the steering shaft 21 is inserted are provided at an upper portion of the front cover 37 which covers the head pipe 16 from the front and an upper portion of the leg shield 39, respectively. Further, the discharge holes 82 and 83 for discharging running wind entering from the front into the front cover 37 to the outside therethrough are provided in at least one of the upper opposing wall 78 of the front cover 37 and the upper opposing wall 79 of the leg shield 39, in the embodiment described above, in the upper opposing wall 79 of the leg shield 39, so as to be disposed at a position at which the opposing walls oppose from the sides to a lower portion of the handlebar cover 49 at a middle location in the vehicle widthwise direction. Therefore, the discharge holes 82 and 83 are disposed at a position at which they are less likely to be seen from the outside, and the rectification effect by the discharge holes 82 and 83 can be enhanced while the discharge holes are made less conspicuous. Besides, since the discharge holes 82 and 83 can be disposed rather near to the center in the vehicle widthwise direction, a negative pressure which is likely to be generated behind the leg shield 39 can be canceled efficiently.

Further, the discharge holes 82 and 83 which are provided on the opposite sides in the vehicle widthwise direction of the upper opposing wall 79 of the leg shield 39 so as to oppose from the sides to a lower portion of the handlebar cover 49 at a middle location in the vehicle widthwise direction and are formed so as to be directed obliquely downwardly toward the center of the vehicle body in the vehicle widthwise direction. Therefore, a negative pressure which is likely to be generated behind the leg shield 39 can be canceled effectively.

Further, the plurality of (in the present embodiment, two) discharge holes 82 are 83 are provided on each of the left and right sides in the vehicle widthwise direction of the upper opposing wall 79 of the leg shield 39 and disposed separately from each other upwardly and downwardly. Therefore, degradation of the rigidity of the upper opposing wall 79 of the leg shield 39 by provision of the discharge holes 82 and 83 can be suppressed.

Further, the discharge holes 82 and 83 are disposed at a position at which the discharge holes 82 and 83 overlap with the handlebar cover 49 as viewed from above in a direction along an axial line of the steering shaft 21. Therefore, the discharge holes 82 and 83 can be made less conspicuous furthermore.

Further, the tail lamp 46 is provided at a rear portion of the rear cover 42 disposed above the rear wheel WR and covering a rear portion of the vehicle body frame F from the sides. Further, the rear fender 44 disposed below the tail lamp 46 and having the license plate 47 attached thereto is provided continuously to the rear cover 42 in such a manner as to cover the rear wheel WR from the upper obliquely rear side. Further, the license plate lamp 48 which illuminates the license plate 47 from above is disposed at an upper portion of the rear fender 44. Further, the rear projection 85 is formed integrally at an upper portion of the rear fender 44 so as to project rearwardly along the upper face of the license plate lamp 48. Therefore, the attaching portion of the license plate lamp 48 to the rear fender 44 can be made less likely to be seen thereby to enhance the design properties.

Further, since the rear projection 85 is hollow, the rear projection 85 can be formed thin and can be reduced in weight. Further, since the upper face 85a of the rear projection 85 is inclined rearwardly downwardly, rainwater sticking to the rear projection 85 can be readily dropped rearwardly, and the attaching portion of the license plate lamp 48 to the rear fender 44 can be made further less likely to be seen thereby to enhance the design properties. Further, since the rear projection 85 is formed thin, also it is facilitated to form the inclined upper face 85a of the rear projection 85.

Further, the rear projection 85 is formed such that it protrudes to the outer sides in the vehicle widthwise direction farther than the attaching portion of the license plate lamp 48 to the rear fender 44. Therefore, the attaching portion of the license plate lamp 48 to the rear fender 44 can be made further less likely to be seen thereby to further raise the design properties. Besides, rainwater dropping from the upper face 85a of the rear projection 85 becomes less likely to be collected into a gap around the attaching portion of the license plate lamp 48 to the rear fender 44.

Furthermore, the reflective plate 86 is attached to the rear fender 44 between the license plate lamp 48 and the license plate 47. Therefore, by making the distance between the license plate lamp 48 and the license plate 47 comparatively great, diffused light becomes likely to be irradiated upon the license plate 47. Further, the reflective plate 86 can be attached to the rear fender 44 making effective use of the space between the license plate lamp 48 and the license plate 47.

While the embodiment of the present invention has been described, the present invention is not limited to the embodiment described above, but allows various design changes without departing from the present invention described in the claims.

### [Description of Reference Symbols]

- 42: Rear cover
- 44: Rear fender
- 46: Tail lamp
- 47: License plate
- 48: License plate lamp
- 85: Rear projection
- 85a: Upper face of rear projection
- 86: Reflective plate
- F: Vehicle body frame
- WR: Rear wheel

## Claims

1. A rear portion structure for a motorcycle, comprising:
a rear cover (42) disposed above a rear wheel (WR) and covering a rear portion of a vehicle body frame (F) from sides;
a tail lamp (46) provided at a rear portion of the rear cover (42);
a rear fender (44) provided continuously to the rear portion of the rear cover (42) and disposed so as to extend downwardly from the rear portion of the rear cover (42) and below the tail lamp (46), the rear fender (44) having a license plate (47) attached thereto;
a license plate lamp (48) provided at an upper portion of the rear fender (44) and configured to illuminate the license plate (47) from above; and
a rear projection (85) projecting rearwardly along an upper face of the license plate lamp (48) wherein the rear projection (85) is formed so as to protrude to an outer side in a vehicle widthwise direction farther than a location at which the license plate lamp (48) is attached to the rear fender (44), wherein the rear projection (85) has an upper face (85a) inclined rearwardly downwardly;
and the rear projection (85) is formed integrally at the upper portion of the rear fender (44); **characterised in that** the rear projection (85) is formed hollow, and **in that** the rear portion structure for a motorcycle, further comprises a reflective plate (86) attached to the rear fender (44) and disposed between the license plate lamp (48) and the license plate (47).

## Patentansprüche

1. Heckabschnittsstruktur für ein Motorrad, umfassend:
eine Heckabdeckung (42), die über einem Hinterrad (WR) angeordnet ist und einen Heckabschnitt eines Fahrzeugkarosserierahmens (F) seitlich abdeckt;
eine Rückleuchte (46), die an einem Heckabschnitt der Heckabdeckung (42) bereitgestellt ist;
einen hinteren Kotflügel (44), der durchgängig zum Heckabschnitt der Heckabdeckung (42) bereitgestellt und so angeordnet ist, dass er sich vom Heckabschnitt der Heckabdeckung (42) nach unten und unter der Rückleuchte (46) erstreckt, wobei der hintere Kotflügel (44) ein Nummernschild (47) aufweist, das diesem befestigt ist;
eine Nummernschildleuchte (48), die an einem oberen Abschnitt des hinteren Kotflügels (44) bereitgestellt und dazu ausgebildet ist, das Nummernschild (47) von oben zu beleuchten; und
einen Heckvorsprung (85), der entlang einer oberen Fläche der Nummernschildleuchte (48) nach hinten vorspringt, wobei der Heckvorsprung (85) so gebildet ist, dass er in einer Fahrzeugbreitenrichtung weiter zu einer Außenseite übersteht als eine Stelle, an der die Nummernschildleuchte (48) am hinteren Kotflügel (44) befestigt ist, wobei der Heckvorsprung (85) eine obere Fläche (85a) aufweist, die nach hinten nach unten geneigt ist;
und der Heckvorsprung (85) einstückig am oberen Abschnitt des hinteren Kotflügels (44) gebildet ist; **dadurch gekennzeichnet, dass** der Heckvorsprung (85) hohl gebildet ist, und dadurch, dass die Heckabschnittsstruktur für ein Motorrad weiter ein reflektierendes Schild (86) umfasst, das am hinteren Kotflügel (44) befestigt und zwischen der Nummernschildleuchte (48) und dem Nummernschild (47) angeordnet ist.

## Revendications

1. Structure de partie arrière pour un motocycle, comprenant :
une coiffe arrière (42) disposée au-dessus d'une roue arrière (WR) et recouvrant une partie arrière d'un châssis de corps de véhicule (F) à partir des côtés ;
un feu arrière (46) disposé dans une partie arrière de la coiffe arrière (42) ;
un capot arrière (44) disposé en continu sur la partie arrière de la coiffe arrière (42) et disposé de manière à s'étendre vers le bas depuis la partie arrière de la coiffe arrière (42) et en dessous du feu arrière (46), le capot arrière (44) ayant une plaque d'immatriculation (47) qui lui est fixée ;
un feu de plaque d'immatriculation (48) disposé sur une partie supérieure du capot arrière (44) et configuré pour éclairer la plaque d'immatriculation (47) par le dessus ; et
une saillie arrière (85) faisant saillie vers l'arrière le long d'une face supérieure du feu de plaque d'immatriculation (48), dans laquelle la saillie arrière (85) est formée de manière à faire saillie vers un côté externe dans le sens de la largeur du véhicule plus loin que l'emplacement où le feu de plaque d'immatriculation (48) est fixé au capot arrière (44), dans laquelle la saillie arrière (85) a une face supérieure (85a) inclinée vers le bas vers l'arrière ; et
la saillie arrière (85) est formée d'un seul tenant sur la partie supérieure du capot arrière (44) ; **caractérisé en ce que** la saillie arrière (85) est creuse et la structure de la partie arrière pour un motocycle comprend en outre une plaque réfléchissante (86) fixée au capot arrière (44) et disposée entre le feu de plaque d'immatriculation (48) et la plaque d'immatriculation (47).
